# DEMANDE DE BREVET EUROPEEN

(11) **EP 1 138 271 A1**
(43) Date de publication de la demande: **04.10.2001**
(21) Numéro de dépôt: 01400747.0
(22) Date de dépôt: 22.03.2001
(51) Int. Cl.: A61C 8/00

(54) **Prothèse dentaire**

(30) Priorité: 31.03.2000 FR 0004144
(71) Demandeur: Yeung, Jean-Claude, 94220 Charenton Le Pont (FR)
(72) Inventeur: Yeung, Jean-Claude, 94220 Charenton Le Pont (FR)
(74) Mandataire: Remy, Fabienne

(57) **Abrégé**

L'invention concerne un ensemble prothétique (100) comprenant un pilier (110) destiné à recevoir une couronne ou un bridge, et une vis de pilier (120) pour solidariser le pilier à un implant implanté dans l'os maxillaire d'un patient, ladite vis de pilier comprenant un corps (121) apte à être solidarisé à l'implant et une tête (122) coopérant avec le pilier.

Selon l'invention, la tête de la vis de pilier est agencée de manière à faire saillie de la gencive du patient en formant avec le pilier, par complémentarité de formes, un volume unique destiné à recevoir la couronne ou le bridge, le pilier représentant au moins environ la moitié dudit volume unique.

## Description

La présente invention concerne de manière générale les prothèses dentaires, et plus particulièrement un ensemble prothétique comprenant un pilier destiné à recevoir une couronne ou un bridge, et une vis de pilier pour solidariser le pilier à un implant implanté dans l'os maxillaire d'un patient, ladite vis de pilier comprenant un corps apte à être solidarisé à l'implant et une tête agencée de manière à faire saillie de la gencive du patient en coopérant avec le pilier pour former, par complémentarité de formes, un volume unique destiné à recevoir la couronne ou le bridge.

Généralement, le pilier présente une extrémité de base adaptée d'une part à la configuration de l'implant auquel il est solidarisé, et d'autre part à la tête de la vis de pilier avec laquelle il coopère.

En effet, l'implant peut prendre toutes sortes de configurations telles qu'un hexagone interne ou externe, ou un octogone interne ou externe ou encore un cylindre pourvu de rainures externes ou internes. L'implant peut également présenter dans sa paroi interne des rainures verticales, en particulier trois rainures verticales disposées, vues en coupe, aux sommets d'un triangle, et le pilier comporte alors au niveau de son extrémité de base des nervures verticales correspondantes destinées à s'engager dans lesdites rainures.

Par ailleurs, de manière usuelle, la vis de pilier comporte un corps fileté et traverse l'extrémité de base du pilier pour se visser dans le corps de l'implant et assurer de ce fait la fixation du pilier sur l'implant.

La tête de la vis de pilier coopère avec l'extrémité de base du pilier située dans la gencive du patient pour que la vis de pilier et le piler forment un ensemble solidaire fixé dans l'implant. Cette tête est généralement cylindrique et est située à l'intérieur du diamètre interne du pilier. Entre la tête de la vis et le pilier il existe un jeu latéral pour permettre le coulissement de cette tête, la surface externe du pilier se trouvant seule en rapport et cimentée à la surface interne de la prothèse.

La difficulté d'un tel ensemble prothétique réside dans la tenue dans le temps de la fixation du pilier, via la vis de pilier, sur l'implant.

En effet, au bout d'un certain temps durant lequel la prothèse dentaire est régulièrement soumise à des efforts de mastication par exemple, il peut s'avérer que la fixation de la vis de pilier dans l'implant se détériore et qu'un certain jeu apparaisse entre la vis de pilier et l'implant, ce qui a pour conséquence de provoquer un jeu de flottement équivalent du pilier portant la couronne ou le bridge par rapport à l'implant, ce qui est inacceptable.

Pour éviter cet inconvénient plusieurs solutions ont déjà été proposées.

Parmi ces solutions, on peut citer l'utilisation d'une vis de pilier en or qui agit sur les parois internes de l'implant comme un lubrifiant réduisant la friction entre le filetage de ladite vis et celui de l'implant, ce qui a pour conséquence positive d'augmenter le couple de serrage entre la vis et l'implant.

Toutefois, l'utilisation de vis de pilier en or à vingt-quatre carats n'est pas du tout économique.

Une autre solution consiste à prévoir entre la tête de la vis de pilier et l'extrémité de base dudit pilier, une coopération de surfaces dite en "cône morse" formant un système anti-dévissage.

Cette coopération de surfaces coniques nécessite une conformation spécifique des surfaces interne et externe de la tête de la vis de pilier et du pilier, ce qui est relativement complexe.

De plus, ces solutions ne peuvent garantir un résultat fiable.

Le document WO 97/14372 illustre une telle solution dans laquelle la tête de la vis comporte deux parties, une partie qui s'étend à l'intérieur du pilier et qui forme avec celui-ci des moyens anti-rotationnels du fait d'une coopération de surfaces internes coniques présentant la même angulation. La deuxième partie de la tête de la vis s'étend au-dessus du pilier et comporte des rainures ou des méplats destinés à coopérer avec la prothèse pour éviter que celle-ci tourne par rapport à l'ensemble prothétique.

Toutefois, dans la solution selon ce document WO 97/14372, la partie du pilier qui fait saillie de la gencive est très courte et représente une faible partie du volume unique formé par la coopération de la tête de la vis et du pilier. Ainsi, cette partie émergente du pilier représente une toute petite surface d'appui pour la couronne ou le bridge et la partie proéminente qui va coopérer majoritairement avec la couronne pour la retenir sur l'ensemble prothétique que ce soit en rotation ou en translation axiale est constituée par la tête de la vis.

Les piliers courts du type précité sont difficiles à mettre en place car, la tête de l'implant se situant sous la gencive, ils ne restent pas immobiles lors du vissage de la vis de pilier et ont tendance à tourner dans le sens de rotation de la vis. De plus, il est nécessaire d'utiliser un contre-angle dynamométrique, ce qui augmente le coût, la complexité et la force délivrée à l'implant.

Dans ce contexte, la présente invention propose une nouvelle solution, simple et économique, pour renforcer la tenue mécanique de la vis de pilier dans un implant dentaire.

Plus particulièrement, l'invention propose un ensemble prothétique comprenant un pilier destiné à recevoir une couronne ou un bridge, et une vis de pilier pour solidariser le pilier à un implant implanté dans l'os maxillaire d'un patient, ladite vis de pilier comprenant un corps apte à être solidarisé à l'implant et une tête agencée de manière à faire saillie de la gencive du patient en coopérant avec le pilier pour former, par complémentarité de formes, un volume unique destiné à recevoir la couronne ou le bridge. Il est caractérisé en ce que le pilier représente au moins environ la moitié dudit volume unique de façon que les surfaces externes du pilier et de la tête de la vis de pilier sont aptes à être adaptées à la surface interne de la couronne ou du bridge pour former des surfaces anti-rotationnelles de cette couronne ou de ce bridge.

Ainsi, selon l'invention, avantageusement, la tête de la vis de pilier et le pilier sont solidarisés l'un à l'autre par le ciment colle permettant la fixation de la couronne ou du bridge sur ledit pilier, ce qui permet de renforcer la fixation de ladite vis de pilier dans l'implant et d'éviter toute désolidarisation malencontreuse ultérieure.

D'autres caractéristiques non limitatives et avantageuses de l'ensemble prothétique selon l'invention sont les suivantes :
- le volume initial formé par la tête de la vis de pilier coopérant avec le pilier est supérieur au volume final apte à recevoir la couronne ou le bridge, ladite tête et/ou le pilier pouvant être repris en fraisage par le praticien pour adapter leur forme au volume final désiré ;
- le pilier présente une structure interne adaptée à la forme externe de la tête de la vis de pilier de sorte que ladite tête et ledit pilier comprennent des zones d'appui complémentaires ;
- les zones d'appui complémentaires de la tête de la vis de pilier et du pilier sont des surfaces planes ou des portions de surfaces coniques ou encore des surfaces cylindriques ;
- la tête de la vis de pilier présente à sa base, sensiblement à la jonction avec son corps, une surface d'appui destinée à venir en appui sur une surface d'appui complémentaire du pilier prévue juste au-dessus de son extrémité de base destinée à coopérer avec l'implant, un jeu existant par ailleurs entre la tête de la vis et le pilier ;
- la vis de pilier est réalisée en deux parties distinctes, le corps et la tête, assemblées l'une à l'autre par un moyen anti-rotatif qui est réalisé préférentiellement par une coopération de formes entre les deux parties ;
- la tête de la vis de pilier présente une forme sensiblement conique ou cylindrique ;
- la vis de pilier est réalisée en titane pur ou en alliage de titane, ou en alliage d'or ;
- le pilier est réalisé en titane pur ou en alliage de titane ou encore en céramique ou en matériau calcinable.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en coupe axiale d'un premier mode de réalisation d'un ensemble prothétique selon l'invention, la tête de la vis de pilier n'étant coupée que partiellement au niveau de son conduit d'introduction d'un organe de manoeuvre ;
- la figure 2 représente l'ensemble prothétique représenté sur la figure 1 sur lequel est monté une couronne ou un bridge ;
- la figure 3 représente la vis de pilier de l'ensemble prothétique représenté sur la figure 1 ;
- la figure 4 est une vue en perspective de la vis de pilier représentée sur la figure 3 ;
- la figure 5 est une vue en coupe du pilier représenté sur la figure 1 ;
- la figure 6 est une vue en perspective du pilier représenté sur la figure 5;
- la figure 7 est une vue de face d'un second mode de réalisation du pilier de l'ensemble prothétique selon l'invention ;
- la figure 8 est une vue de face d'un troisième mode de réalisation du pilier de l'ensemble prothétique selon l'invention ;
- les figures 9 et 10 sont respectivement des vues de face et en coupe axiale d'un autre mode de réalisation de l'ensemble prothétique selon l'invention ;
- la figure 11 est une vue schématique en perspective d'une variante de réalisation de la vis de pilier de l'ensemble prothétique selon l'invention ;
- la figure 12 est une vue schématique partiellement coupée d'une autre variante de réalisation de la vis de pilier et du pilier de l'ensemble prothétique selon l'invention ; et
- la figure 13 est une vue schématique partiellement coupée d'une autre variante de réalisation de la vis de pilier et du pilier de l'ensemble prothétique selon l'invention.

De façon préliminaire, on notera que d'un mode de réalisation à l'autre représenté sur les différentes figures, les éléments identiques ou similaires seront dans la mesure du possible référencés par les mêmes signes de référence et ne seront pas décrits à chaque fois.

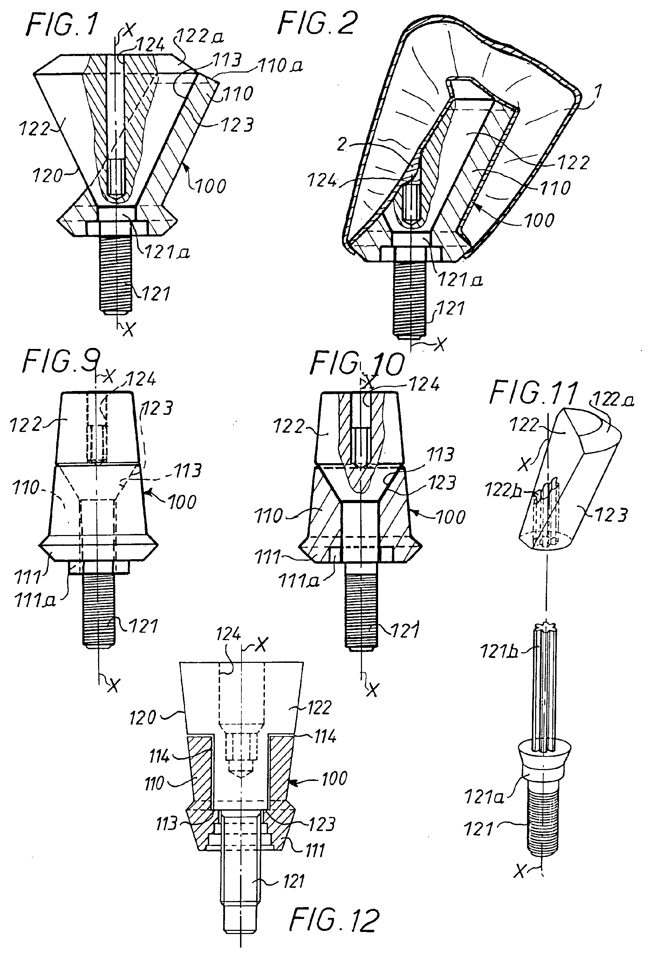

En référence tout d'abord aux figures 1 à 8, on a représenté un ensemble prothétique 100 comprenant un pilier 110 destiné à recevoir une couronne ou un bridge 1. La couronne ou le bridge 1 est solidarisé au pilier 110 par une colle ou ciment 2. L'ensemble prothétique 100 comprend également une vis de pilier 120 traversant l'extrémité de base 111 du pilier 110, via un conduit de passage 112 prévu dans l'extrémité de base 111 dudit pilier 110, pour solidariser le pilier 110 à un implant (non représenté) implanté dans l'os maxillaire d'un patient.

Selon le mode de réalisation représenté sur les figures 1 à 4, ladite vis de pilier 120 s'étend généralement selon un axe X et comprend un corps 121 globalement cylindrique de révolution autour de l'axe X et pourvu sur une partie de sa longueur d'un filetage destiné à coopérer avec un taraudage correspondant prévu sur la paroi interne de l'implant non représenté. En partie supérieure, le corps 121 de la vis de pilier 120 comprend une partie non filetée 121a destinée à coopérer avec un logement interne 112 prévu dans l'extrémité de base 111 du pilier 110, ce logement interne 112 formant conduit de passage de la vis de pilier 120 et présentant une forme complémentaire de celle de l'extrémité supérieure 121a du corps 121 de ladite vis de pilier 120.

Ici, l'extrémité supérieure 121a du corps 121 de la vis de pilier 120 présente une forme simple de couronne cylindrique de révolution, et le logement interne 112 correspondant dans le pilier 110 présente une forme complémentaire cylindrique de révolution autour de l'axe X, mais bien entendu on pourrait prévoir toute autre forme complémentaire du type hexagone, octogone ou autre.

La vis de pilier 120 comporte en outre une tête 122 coopérant avec le pilier 110.

Selon le mode de réalisation représenté sur les figures 1 à 4, la tête 122 et le corps 121 de la vis de pilier 120 forment une seule pièce.

Avantageusement, la tête 122 de la vis de pilier 120 est agencée de manière à faire saillie de la gencive du patient en formant avec le pilier 110, par complémentarité de formes, un volume unique destiné à recevoir la couronne ou le bridge 1 (voir figure 2).

Ce volume unique est ici avantageusement formé en grande partie par le pilier 110 qui représente au moins environ la moitié de celui-ci de sorte que les surfaces externes (non référencées) de la tête 122 de la vis 120 et du pilier 110 sont aptes à être adaptées à la surface interne de la couronne ou du bridge 1 pour former des surfaces anti-rotationnelles de cette couronne ou de ce bridge.

Ainsi, lors du montage de la couronne ou du bridge sur le volume unique formé par la tête 122 de la vis et le pilier 110, l'ensemble est solidarisé par la colle ou le ciment de colle 2 nécessaire à la solidarisation de la couronne ou du bridge, et la vis de pilier 120 est définitivement bloquée en rotation à l'intérieur de l'implant non représenté. Cela permet de renforcer la fixation par vissage du corps 121 de la vis dans l'implant.

Le volume initial formé par la tête 122 de la vis de pilier 120 coopérant avec le pilier 110 est supérieur au volume final apte à recevoir la couronne ou le bridge (voir figures 1 et 2). La tête 122 et/ou le pilier 110 peuvent alors être repris en fraisage par le praticien pour adapter leur forme au volume final désiré.

Après cette reprise en fraisage de la tête 122 de la vis 120 et/ou du pilier 110, la proportion du volume unique constituée par le pilier 110 est encore accentuée et celui-ci peut représenter pratiquement les 2/3 dudit volume unique.

Le pilier 110 présente une structure interne adaptée à la forme externe de la tête 122 de la vis de pilier 120, de sorte que ladite tête 122 de la vis de pilier 120 et le pilier 110 comprennent des zones d'appui 123, 113 complémentaires.

Selon le mode de réalisation représenté sur les figures 1 à 8, les zones d'appui complémentaires 123, 113 de la tête 122 de la vis de pilier 120 et du pilier 110 sont des portions de surfaces coniques.

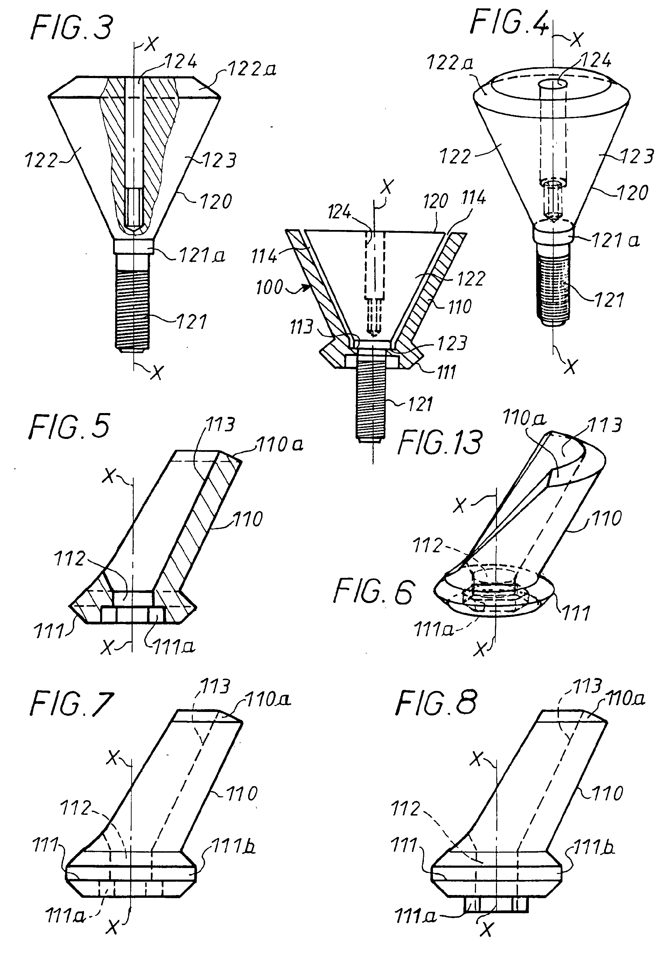

A cet effet, la tête 122 de la vis de pilier 120 présente ici une forme conique, et le pilier est "'préangulé", c'est-à-dire qu'il s'étend généralement selon une direction formant un angle avec l'axe X, et il présente une surface interne en forme de portion de cône (voir plus particulièrement la figure 6). Un tel pilier peut être "préangulé" de différentes "angulations" lors de l'usinage ou bien il peut présenter un volume initial plus important que le volume définitif, ce volume initial étant destiné à être fraisé pour donner une orientation souhaitable par rapport à l'axe d'insertion de la couronne ou du bridge. La surface supérieure tronconique 122a de la tête 122 de la vis de pilier 120 prolonge continûment la surface supérieure tronconique 110a du pilier 110.

Bien entendu, comme cela sera explicité plus en détail en référence aux figures 9 et 10, la tête 122 de la vis de pilier 120 et le pilier 110 peuvent prendre d'autres formes, en particulier la tête 122 de la vis de pilier peut être de forme conique inversée, cylindrique ou cylindrique en escalier augmentant de volume vers son sommet. Le pilier 110 peut présenter également une forme légèrement conique s'étendant selon l'axe X, comme cela est représenté plus particulièrement sur les figures 9 et 10.

Comme le montrent plus particulièrement les figures 1 à 4, la tête 122 de la vis de pilier 120 comprend un conduit axial 124 pour l'introduction d'un organe de manoeuvre permettant son introduction au travers du pilier 110 et son vissage à l'intérieur de l'implant non représenté. Ce conduit axial 124 présente une longueur telle qu'une fois la tête 122 de la vis de pilier 120 est reprise en fraisage, une partie du conduit 124 reste accessible à l'organe de manoeuvre pour éventuellement dévisser la vis si besoin est.

Sur les figures 9 et 10, on a représenté un autre mode de réalisation de l'ensemble prothétique 100 conforme à l'invention, selon lequel le pilier 110 présente une forme globalement conique s'étendant selon l'axe X de la vis de pilier 120, et la tête 122 de la vis de pilier introduite au travers du pilier 110 présente une forme complémentaire globalement conique elle aussi. La tête 122 forme un prolongement selon l'axe X du pilier 110. Les zones d'appui complémentaire 123, 113 de la tête 122 de la vis de pilier 120 et du pilier 110 sont ici également des portions de surfaces coniques, mais on pourrait prévoir, en variante non représentée, que ces surfaces d'appui complémentaires soient des surfaces cylindriques ou encore des surfaces planes.

Ici aussi, la tête 122 de la vis de pilier 120 et/ou le pilier 110 peuvent être repris en fraisage par le praticien pour adapter leur forme au volume final désiré destiné à recevoir la couronne ou le bridge.

Selon le mode de réalisation représenté sur les figures 9 et 10, le corps 121 de la vis de pilier 120 présente une plus grande partie non filetée traversant le pilier 110.

Selon le mode de réalisation représenté sur la figure 12, la tête 122 de la vis de pilier 120 présente à sa base, sensiblement à la jonction avec son corps 121, une surface d'appui 123 ici une surface plane destinée à venir en appui sur une surface d'appui complémentaire 113 plane du pilier 110 prévue juste au-dessus de son extrémité de base 111 destinée à coopérer avec l'implant, un jeu 114 existant par ailleurs entre la tête 122 de la vis de pilier 120 et le pilier 110.

Les surfaces d'appui complémentaires de la tête de la vis de pilier et du pilier peuvent également être des surfaces coniques ou cylindro-coniques.

Sur la figure 13 on a représenté une variante de réalisation selon laquelle la tête 122 de la vis de pilier 120 présente une forme conique, et le pilier 110 présente également une forme conique qui enveloppe la tête 122 de la vis de pilier 120.

La tête 122 de la vis de pilier 120 présente également à sa base, sensiblement à la jonction avec son corps 121, une surface d'appui 123 plane (qui peut être conique ou cylindro-conique) destinée à venir en appui sur une surface d'appui complémentaire 113 plane (ou conique ou cylindro-conique) du pilier 110 prévue juste au-dessus de son extrémité de base 111 destinée à coopérer avec l'implant, un jeu 114 existant par ailleurs entre la tête 122 de la vis de pilier 120 et le pilier 110.

Le praticien peut travailler par fraisage le volume important que représente la tête 122 de la vis de pilier 120 et le pilier 110, pour adapter les surfaces externes de la tête 122 et du pilier 110 à la surface interne de la couronne ou du bridge 1 (voir figure 2) afin que celles-ci forment des surfaces anti-rotatives ou anti-rotationnelles de ladite couronne 1 placée sur le volume unique travaillé.

En particulier, le praticien peut à sa convenance "préanguler" par fraisage le pilier 110, pour arriver à une configuration similaire de celle représentée sur la figure 1.

Sur la figure 11, on a représenté un autre mode de réalisation de la vis de pilier 120 de l'ensemble prothétique 100 conforme à l'invention, selon lequel ladite vis de pilier 120 est réalisée en deux parties distinctes, le corps 121 et la tête 122, assemblées l'une à l'autre par un moyen anti-rotatif 121b, 122b.

Le moyen anti-rotatif 121b, 122b est réalisé par une coopération de formes entre les deux parties 121, 122. Ici, le corps 121 de la vis de pilier 120 comporte, au-dessus de sa partie filetée, une tige ou moignon s'étendant selon l'axe X et pourvu sur sa surface externe de cannelures 121b coopérant avec des rainures complémentaires 122b d'un conduit interne axial prévu dans la tête 122 de la vis de pilier 120.

Bien entendu, par ailleurs, les deux parties 121, 122 de la vis de pilier 120 sont assemblées axialement l'une à l'autre au moyen d'un ciment ou colle déposé à la base de chacune des deux parties.

En ce qui concerne le moyen anti-rotatif, on peut prévoir, selon d'autres variantes non représentées, toute autre forme complémentaire telle qu'une forme hexagonale, octogonale, carrée ou encore elliptique.

En ce qui concerne plus particulièrement le pilier 110 de l'ensemble prothétique 100, comme le montrent les différentes figures, et en particulier les figures 5 à 8, celui-ci présente une extrémité de base 111, 111a adaptée à toutes sortes de configurations d'implant, telles qu'une configuration en hexagone externe ou interne, ou en octogone externe ou interne (voir figures 5 à 8), ou encore à une configuration cylindrique avec des rainures externes ou internes. On peut également prévoir un implant qui présente une configuration d'extrémité hexagonale externe ou interne et un pilier dont la configuration de son extrémité de base coopérant avec l'implant soit dodécagonale de sorte qu'elle permet de positionner le pilier par rapport à l'implant selon douze positions différentes.

Un tel pilier peut présenter une extrémité de base de différentes hauteurs pour s'adapter aux gencives de différentes épaisseurs. En particulier, le pilier représenté sur les figures 7 et 8 comporte, par rapport à celui représenté sur les figures 5 et 6, une hauteur de base supérieure donnée par une surépaisseur 111b prévue entre la partie supérieure et la partie inférieure de l'extrémité de base 111 dudit pilier.

De plus, un tel pilier, présentant une surface externe importante adaptée à coopérer avec la surface interne d'un élément prothétique, peut présenter des agencements augmentant sa rétention avec un élément prothétique tels que des rainures verticales ou horizontales, un traitement de surface spécifique, des trous transversaux ou autres. Il peut recevoir des bagues allonges de différents matériaux, par exemple en titane, en céramique ou autre. Ce pilier peut également présenter à sa base au niveau de l'appui de la vis de pilier une forme variable qui peut être plate ou conique.

Enfin, le pilier généralement cylindrique au niveau du cerclage de la gencive peut être anatomique, c'est-à-dire présenter une section d'une racine naturelle.

La vis de pilier 120 est avantageusement réalisée en titane pur, en alliage de titane, ou encore en alliage d'or.

Lorsqu'elle est réalisée en deux parties, la première partie constituant le corps de la vis peut être réalisée en alliage de titane, en titane pur, en or ou en tout autre matériau adapté. La deuxième partie peut être réalisée en alliage de titane, en titane pur, en matériau calcinable, en céramique ou en tout autre matériau adapté.

Le pilier 110 de l'ensemble prothétique est avantageusement réalisé en titane pur ou en alliage de titane, ou encore en céramique ou en matériau calcinable.

La présente invention n'est nullement limitée aux modes de réalisation décrits et représentés, mais l'homme du métier saura y apporter toute variante conforme à son esprit.

## Revendications

1. Ensemble prothétique (100) comprenant un pilier (110) destiné à recevoir une couronne ou un bridge (1), et une vis de pilier (120) pour solidariser le pilier (110) à un implant implanté dans l'os maxillaire d'un patient, ladite vis de pilier (120) comprenant un corps (121) apte à être solidarisé à l'implant et une tête (122) agencée de manière à faire saillie de la gencive du patient en coopérant avec le pilier pour former, par complémentarité de formes, un volume unique destiné à recevoir la couronne ou le bridge (1), **caractérisé en ce que** le pilier représente au moins environ la moitié dudit volume unique de façon que les surfaces externes du pilier (110) et de la tête (122) de la vis de pilier (120) sont aptes à être adaptées à la surface interne de la couronne ou du bridge (1) pour former des surfaces anti-rotationnelles de cette couronne ou de ce bridge (1).

2. Ensemble prothétique (100) selon la revendication 1, **caractérisé en ce que** le volume initial formé par la tête (122) de la vis de pilier (120) coopérant avec le pilier (110) est supérieur au volume final apte à recevoir la couronne ou le bridge, ladite tête (122) et/ou le pilier (110) pouvant être repris en fraisage par le praticien pour adapter leur forme au volume final désiré.

3. Ensemble prothétique (100) selon l'une des revendications 1 ou 2, **caractérisé en ce que** le pilier (110) présente une structure interne adaptée à la forme externe de la tête (122) de la vis de pilier (120) de sorte que ladite tête (122) et ledit pilier (110) comprennent des zones d'appui (123, 113) complémentaires.

4. Ensemble prothétique (100) selon la revendication 3, **caractérisé en ce que** les zones d'appui complémentaires (123, 113) de la tête (122) de la vis de pilier (120) et du pilier (110) sont des surfaces planes.

5. Ensemble prothétique (100) selon l'une des revendications 3 ou 4, **caractérisé en ce que** la tête (122) de la vis de pilier (120) présente à sa base, sensiblement à la jonction avec son corps (121), une surface d'appui (123) destinée à venir en appui sur une surface d'appui complémentaire (113) du pilier (110) prévue juste au-dessus de son extrémité de base (111) destinée à coopérer avec l'implant, un jeu (114) existant par ailleurs entre la tête (122) de la vis de pilier (120) et le pilier (110).

6. Ensemble prothétique (100) selon la revendication 3, **caractérisé en ce que** les zones d'appui complémentaires (123, 113) de la tête (122) de la vis de pilier (120) et du pilier (110) sont des portions de surfaces coniques.

7. Ensemble prothétique (100) selon la revendication 3, **caractérisé en ce que** les zones d'appui complémentaires de la tête de la vis de pilier et du pilier sont des surfaces cylindriques.

8. Ensemble prothétique (100) selon l'une quelconque des revendications précédentes, **caractérisé en ce que** la vis de pilier (120) est réalisée en deux parties distinctes, le corps (121) et la tête (122), assemblées l'une à l'autre par un moyen anti-rotatif.

9. Ensemble prothétique (100) selon la revendication 8, **caractérisé en ce que** ledit moyen anti-rotatif est réalisé par une coopération de formes entre les deux parties.

10. Ensemble prothétique (100) selon l'une quelconque des revendications précédentes, **caractérisé en ce que** la tête (122) de la vis de pilier (120) présente une forme sensiblement conique ou cylindrique.

11. Ensemble prothétique (100) selon l'une quelconque des revendications précédentes, **caractérisé en ce que** la vis de pilier (120) est réalisée en titane pur ou en alliage de titane.

12. Ensemble prothétique (100) selon l'une quelconque des revendications 1 à 10, **caractérisé en ce que** la vis de pilier (120) est réalisée en alliage d'or.

13. Ensemble prothétique (100) selon l'une quelconque des revendications précédentes, **caractérisé en ce que** le pilier (110) est réalisé en titane pur ou en alliage de titane.

14. Ensemble prothétique (100) selon l'une quelconque des revendications 1 à 12, **caractérisé en ce que** le pilier (110) est réalisé en céramique ou en matériau calcinable.
